# FASCICULE DE BREVET EUROPEEN

(11) **EP 3 153 327 B1**
(45) Date de publication et mention de la délivrance du brevet: **18.04.2018**
(21) Numéro de dépôt: 16187163.7
(22) Date de dépôt: 05.09.2016
(51) Int. Cl.: B60B 7/00

(54) **ENJOLIVEUR AERODYNAMIQUE PERFECTIONNE POUR ROUE DE VEHICULE**
PERFEKTIONIERTE AERODYNAMISCHE RADKAPPE FÜR FAHRZEUGRAD
IMPROVED AERODYNAMIC COVER FOR A VEHICLE WHEEL

(30) Priorité: 05.10.2015 FR 1559423
(43) Date de publication de la demande: 12.04.2017
(73) Titulaire: PSA Automobiles SA, 78300 Poissy (FR)
(72) Inventeur: PALPACUER, Eric, 75013 PARIS (FR)

(56) Documents cités:
- EP-A1- 0 301 553
- EP-A1- 2 351 654
- DE-A1-102013 222 044

## Description

L'invention porte sur un enjoliveur aérodynamique perfectionné pour roue de véhicule, en particulier pour roue de véhicule automobile. Elle concerne aussi un véhicule, en particulier un véhicule automobile, dont les roues sont équipées de tels enjoliveurs aérodynamiques perfectionnés.

L'enjoliveur de roue, appelé aussi chapeau de roue, est une pièce en matière métallique ou en matière plastique, par exemple en polyamide, qui est placée sur l'extérieur de la partie centrale d'une roue d'un véhicule pour décorer : l'enjoliveur permet « d'habiller » les roues en tôle du véhicule conçues comme structurelles et dépourvues de style.

Les enjoliveurs dits « enjoliveurs standards » ne présentent pas de caractéristiques aérodynamiques optimales, mais essentiellement des caractéristiques de style. Ils présentent un ajourage relativement important et impactent l'aérodynamique du véhicule.

On connaît des enjoliveurs dits « aérodynamiques », qui permettent de réduire la traînée aérodynamique du véhicule. Ils présentent, contrairement aux enjoliveurs précédents, un ajourage minimal qui a une incidence négative sur le refroidissement des freins.

On connaît, selon le document EP 0 301 553 B1, une roue pour véhicule à moteur, qui comprend une jante, un disque de roue relié à la jante, des ouvertures de sortie d'air prévues dans le disque de roue, concentriques avec la jante, réparties sur la surface dans la zone proche de la jante et assurant un courant d'air dirigé depuis le côté intérieur de la roue vers le côté extérieur de la roue, des ouvertures d'entrée d'air disposées dans le disque de roue, concentriques avec la jante, réparties sur la surface, radialement plus proches de l'axe que les ouvertures de sortie d'air et assurant un courant d'air dirigé depuis le côté extérieur de la roue vers le côté intérieur de la roue, et une couronne d'ailettes associée respectivement aux ouvertures d'entrée d'air et aux ouvertures de sortie d'air. Au moins des parties des ailettes des deux couronnes d'ailettes présentent des positions inclinées par rapport à l'axe de roue et les positions inclinées des ailettes des deux couronnes d'ailettes sont dirigées en sens inverse. De plus, il est prévu un canal annulaire d'entrée d'air recevant la couronne d'ailettes associée aux ouvertures d'entrée d'air, et un canal annulaire de sortie d'air recevant la couronne d'ailettes associée aux ouvertures de sortie d'air.

On connaît également, selon le document FR 3 011 769 A1, un enjoliveur aérodynamique perfectionné pour roue de véhicule automobile, la roue étant de type présentant une jante cylindrique et un voile comportant des ajourages radiaux formés par des rayons disposés radialement entre le moyeu central et le bord périphérique de la jante. Cet enjoliveur présente des ajourages radiaux formés par des pales d'enjoliveur disposées radialement entre la partie centrale de l'enjoliveur et le bord périphérique de ce dernier, de telle sorte que les pales d'enjoliveur dévient le flux d'air latéral de manière indirecte et le canalise au travers des ajourages radiaux du voile de la roue.

Le document DE102013222044 A décrit aussi un enjoliveur aérodynamique perfectionné pour roue de véhicule, l'enjoliveur présente des ajourages radiaux et une pale aérodynamique, qui s'étendent radialement entre la partie centrale et le bord périphérique de l'enjoliveur.

Le but de la présente invention est de fournir un enjoliveur aérodynamique perfectionné pour roue de véhicule, en particulier pour roue de véhicule automobile, qui permette d'optimiser, à la fois, la traînée aérodynamique du véhicule et le refroidissement des freins.

Un autre but de la présente invention est de fournir un tel enjoliveur aérodynamique, qui apporte un gain en CO₂.

Un autre but de la présente invention est de fournir un tel enjoliveur aérodynamique, qui soit économique, parce qu'il est identique pour une roue droite et pour une roue gauche du véhicule et parce qu'il est d'un coût sensiblement égal à celui d'un enjoliveur standard.

C'est également un but de la présente invention de fournir un tel enjoliveur aérodynamique perfectionné, qui soit de structure simple et d'assemblage aisé.

Pour parvenir à ces buts, la présente invention a pour objet un enjoliveur aérodynamique perfectionné pour roue de véhicule, en particulier pour roue de véhicule automobile. La roue présente une jante cylindrique, un moyeu et une structure de type à rayons, qui relie le moyeu à la jante et qui définit des ajourages radiaux. L'enjoliveur aérodynamique présente une partie centrale, un bord périphérique et un voile de type à bâtons radiaux, qui relie la partie centrale au bord périphérique et qui définit aussi des ajourages radiaux. L'enjoliveur aérodynamique perfectionné selon l'invention, nouveau, comprend, dans chacun de ses ajourages radiaux, deux pales aérodynamiques, qui s'étendent radialement entre la partie centrale et le bord périphérique de l'enjoliveur et qui présentent une section à profil en « aile d'avion », à savoir une première pale aérodynamique orientée pour aspirer l'air lors de la rotation de la roue dans le sens des aiguilles d'une montre et une seconde pale aérodynamique orientée de façon opposée à ladite première pale aérodynamique pour aspirer l'air lors de la rotation de la roue dans le sens inverse des aiguilles d'une montre.

Selon un mode préféré de réalisation de l'invention, l'orientation des pales aérodynamiques peut être d'angle compris entre 2° et 20° par rapport au plan principal de l'enjoliveur, de préférence cette orientation des pales peut être d'angle compris entre 3° et 13°.

Selon un mode préféré de réalisation de l'invention également, le voile de l'enjoliveur peut être à cinq bâtons radiaux, et par conséquent le nombre des ajourages radiaux de l'enjoliveur selon l'invention peut être égal à cinq.

Avantageusement, les ajourages radiaux de l'enjoliveur peuvent présenter des bords formant déflecteurs, sensiblement inclinés vers l'intérieur desdits ajourages radiaux, de façon à concentrer le flux d'air dans les ajourages radiaux de la structure de la roue.

Le profil en « aile d'avion » de la section des pales d'enjoliveur peut être un profil choisi parmi les types de profil « en aile d'avion » suivants, connus en soi : profil de type « CLARK Y », profil de type « JOUKOWSKI », profil de type « NACA » symétrique ou cambré.

De manière préférentielle, l'enjoliveur selon l'invention peut être réalisé en un matériau polymère, de type polyamide par exemple, par un procédé de moulage par injection.

L'invention a aussi pour objet une roue de véhicule, en particulier une roue de véhicule automobile, qui comporte un enjoliveur aérodynamique perfectionné conforme à celui décrit ci-dessus dans ses grandes lignes.

L'invention a enfin pour objet un véhicule, en particulier un véhicule automobile, dont les roues sont conformes à la roue décrite ci-dessus dans ses grandes lignes, c'est-à-dire comportant chacune un enjoliveur aérodynamique perfectionné selon la présente invention.

D'autres buts, avantages et caractéristiques de l'invention apparaîtront dans la description qui suit d'un exemple de réalisation, non limitatif de l'objet et de la portée de la présente demande de brevet, accompagnée de dessins dans lesquels :
- la figure 1 est une vue en perspective, tronquée, d'une roue de véhicule automobile équipée d'un enjoliveur aérodynamique perfectionné selon la présente invention,
- la figure 2 est une vue en perspective, partielle, agrandie, d'une paire de pales aérodynamiques de l'enjoliveur aérodynamique perfectionné de la figure 1,
- la figure 3 est un croquis représentatif de la section transversale en forme « d'aile d'avion » d'une pale de l'enjoliveur aérodynamique perfectionné des figures précédentes, et
- la figure 4 est un schéma illustrant la section transversale de pale d'enjoliveur en forme « d'aile d'avion » de la figure 3, sur laquelle sont représentées très schématiquement les zones de surpression et de dépression lorsque l'enjoliveur est en rotation avec sa roue correspondante.

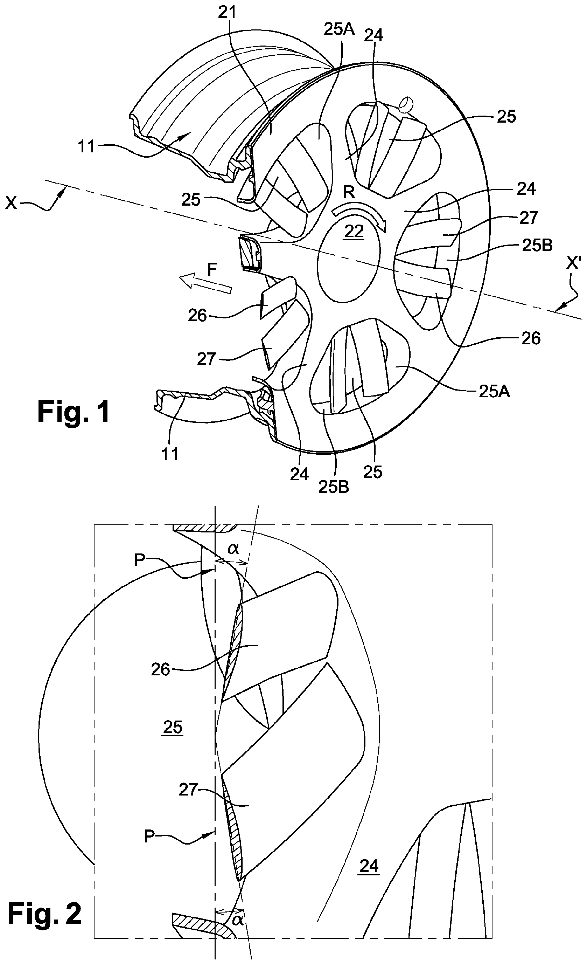

En référence au dessin de la figure 1, on a représenté une partie d'une roue droite de véhicule automobile, d'axe XX', qui est, de manière classique, constituée principalement de trois parties :
- le moyeu, non représenté, disposé au centre de la roue, qui assure le guidage en rotation de cette dernière par rapport au châssis du véhicule,
- la jante, désignée par la référence 11, qui est située à la périphérie et sur laquelle se fixe la bande de roulement rapportée, et
- la structure, non représentée, qui est composée de rayons, qui relient le moyeu à la jante 11 et qui définissent des ajourages radiaux, sensiblement en secteurs circulaires.

Sur la roue, il est prévu un enjoliveur aérodynamique perfectionné, appelé aussi « enjoliveur turbine » dans le présent texte, dont la structure décrite en détails ci-après permet une circulation d'air au travers de la roue de véhicule, de façon à améliorer le sillage latéral de la roue et obtenir, ainsi, un écoulement plus propre et moins tourbillonnaire sur les flancs du véhicule.

De façon classique, l'enjoliveur aérodynamique perfectionné présente une partie centrale, désignée par la référence 22, un bord périphérique, désigné par la référence numérique 21 et un voile de type à bâtons radiaux désignés collectivement par la référence 24. Ces bâtons radiaux 24 relient la partie centrale 22 au bord périphérique 21 de l'enjoliveur et définissent des ajourages radiaux, désignés collectivement par la référence 25, qui, sensiblement, peuvent correspondre aux ajourages radiaux de la structure de la roue.

A titre d'exemple non limitatif de l'objet et de la portée de la présente invention, l'enjoliveur turbine présente un voile à cinq bâtons radiaux 24 angulairement équidistants, par conséquent à cinq ajourages radiaux 25 identiques.

Selon le principe même de la présente invention, l'enjoliveur aérodynamique perfectionné comprend, dans chacun de ses ajourages radiaux 25, deux pales aérodynamiques, désignées respectivement 26 et 27, qui s'étendent radialement entre la partie centrale 22 et le bord périphérique 21 de l'enjoliveur et qui présentent une section à profil en « aile d'avion », à savoir une pale aérodynamique 26 orientée pour aspirer l'air (sens de la flèche « F » de la figure 1) lors de la rotation de la roue dans le sens des aiguilles d'une montre (sens de la flèche « R » de la figure 1) et une pale aérodynamique 27 orientée pour aspirer l'air (sens de la flèche « F » également) lors de la rotation de la roue dans le sens inverse des aiguilles d'une montre.

En référence également au dessin de la figure 2, pour que la pale aérodynamique 27 aspire l'air lors d'une rotation inverse de la roue par rapport au sens de rotation de cette roue qui permet une aspiration de l'air par la pale aérodynamique 26, il faut que les sections à « profil d'avion » des deux pales 26 et 27 soient inversement orientées par rapport au plan principal « P » de l'enjoliveur, c'est-à-dire au plan orthogonal à l'axe XX' de la roue et de l'enjoliveur monté sur cette dernière.

L'orientation des pales aérodynamiques 26 et 27 est d'un angle « α », dont la valeur peut être comprise entre 2° et 20° d'angle, de préférence comprise entre 3° et 13° d'angle, par rapport au plan principal « P » de l'enjoliveur.

Il importe de noter que l'enjoliveur des figures 1 et 2 monté sur une roue droite peut être monté sans aucune modification sur une roue gauche. Dans ce cas, ce sont les pales aérodynamiques 27, et non plus les pales 26, qui sont orientées pour aspirer l'air lors de la rotation de la roue dans le sens des aiguilles d'une montre. L'enjoliveur selon la présente invention est, par conséquent, un enjoliveur standard pour roue droite et roue gauche du véhicule.

Comme représenté sur le dessin de la figure 1 principalement, les ajourages radiaux 25 présentent des bords radiaux 25A et des bords périphériques 25B qui forment déflecteurs, sensiblement inclinés vers l'intérieur desdits ajourages radiaux 25, de façon à concentrer le flux d'air dans les ajourages radiaux de la structure de la roue.

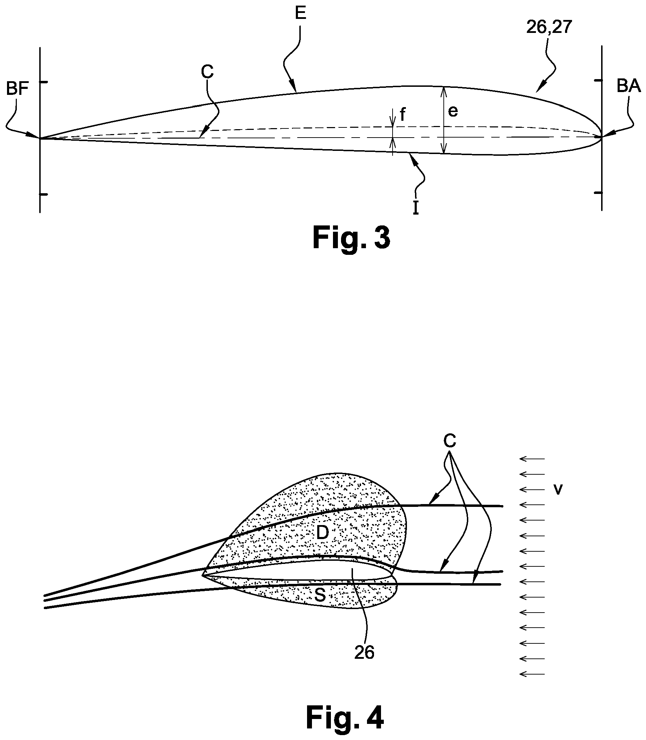

De préférence, le profil en « aile d'avion » des pales aérodynamiques 26 et 27 est un profil de type « CLARK Y », de forme relativement simple, très efficace à petite échelle, qui est représenté de façon très schématique sur le dessin de la figure 3. Le profil « CLARK Y » est un profil aérodynamique particulier, très largement utilisé dans la construction aéronautique et le modélisme.

Dans le profil en « aile d'avion » de la figure 3 représentatif de la section d'une pale aérodynamique 26 ou 27, la référence « E » désigne l'extrados et « I » l'intrados, « C » la corde, « e » l'épaisseur du profil, BA le bord d'attaque et BF le bord de fuite. La référence « f » désigne la flèche du profil, d'autant plus importante que le profil en « aile d'avion » est plus un profil cambré.

En variante, le profil en « aile d'avion » des pales aérodynamiques 26 et 27 peut être un profil de type « JOUKOWSKI », ou bien un profil de type « NACA », symétrique ou cambré.

En référence au dessin de la figure 4, on a représenté une section du profil en « CLARK Y » d'une pale aérodynamique de l'enjoliveur turbine, par exemple une pale 26, et un flux d'air « v » autour de la pale. Les lignes « c » illustrent les couches laminaires. La zone désignée « D » est une zone de dépression, tandis que la zone désignée « S » est une zone de surpression. La surpression liée à la pale aérodynamique souffle l'air dans l'ajourage de la roue, l'air est canalisé par les surfaces formant déflecteurs 25A et 25B de l'enjoliveur représentées sur la figure 1.

L'enjoliveur aérodynamique perfectionné ou enjoliveur turbine décrit ci-dessus dans un mode de réalisation particulier présente de nombreux avantages, parmi lesquels les avantages suivants :
- il permet d'optimiser la traînée aérodynamique du véhicule,
- il permet un gain en CO2 estimé à 0,5g/Km,
- il permet un refroidissement du frein optimisé par le flux d'air généré,
- il est économique, parce que son coût de revient est sensiblement identique à celui d'un enjoliveur standard, le coût de son outillage de fabrication étant sensiblement le même que le coût de l'outillage d'un enjoliveur standard, et
- il est également économique parce qu'il est identique pour une roue droite et une roue gauche du véhicule.

## Revendications

1. Enjoliveur aérodynamique perfectionné pour roue de véhicule, en particulier pour roue de véhicule automobile, ladite roue présentant une jante cylindrique (11), un moyeu et une structure de type à rayons reliant le moyeu à la jante (11) et définissant des ajourages radiaux et ledit enjoliveur aérodynamique perfectionné présentant une partie centrale (22), un bord périphérique (21) et un voile de type à bâtons radiaux (24) reliant la partie centrale (22) au bord périphérique (21) et définissant des ajourages radiaux (25), ledit enjoliveur aérodynamique perfectionné étant **caractérisé en ce qu'**il comprend, dans chacun de ses ajourages radiaux (25), deux pales aérodynamiques (26, 27), qui s'étendent radialement entre la partie centrale (22) et le bord périphérique (21) de l'enjoliveur et qui présentent une section à profil en « aile d'avion », à savoir une première pale aérodynamique (26) orientée pour aspirer l'air lors de la rotation de la roue dans le sens des aiguilles d'une montre et une seconde pale aérodynamique (27) orientée de façon opposée à ladite première pale aérodynamique pour aspirer l'air lors de la rotation de la roue dans le sens inverse des aiguilles d'une montre.

2. Enjoliveur aérodynamique perfectionné selon la revendication 1, **caractérisé en ce que** l'orientation des pales aérodynamiques (26, 27) est d'angle (« α ») compris entre 2° et 20° par rapport au plan principal (« P ») de l'enjoliveur.

3. Enjoliveur aérodynamique perfectionné selon la revendication 2, **caractérisé en ce que** ladite orientation des pales aérodynamiques (26, 27) est d'angle (« α ») compris entre 3° et 13°.

4. Enjoliveur aérodynamique perfectionné selon l'une quelconque des revendications 1 à 3, **caractérisé en ce que** le nombre des ajourages radiaux (25) est égal à cinq.

5. Enjoliveur aérodynamique perfectionné selon l'une quelconque des revendications 1 à 4, **caractérisé en ce que** les ajourages radiaux (25) présentent des bords (25A, 25B) formant déflecteurs, sensiblement inclinés vers l'intérieur desdits ajourages radiaux (25), de façon à concentrer le flux d'air dans les ajourages radiaux de la structure de la roue.

6. Enjoliveur aérodynamique perfectionné selon l'une quelconque des revendications 1 à 5, **caractérisé en ce que** le profil en « aile d'avion » de la section des pales d'enjoliveur (25) est un profil choisi parmi les types de profil « en aile d'avion » suivants, connus en soi : profil de type « CLARK Y », profil de type « JOUKOWSKI », profil de type « NACA » symétrique ou cambré.

7. Enjoliveur aérodynamique perfectionné selon l'une quelconque des revendications 1 à 6, **caractérisé en ce qu'**il est réalisé en un matériau polymère, de type polyamide par exemple.

8. Enjoliveur aérodynamique perfectionné selon la revendication 7, **caractérisé en ce qu'**il est obtenu par un procédé de moulage par injection.

9. Roue de véhicule, **caractérisée en ce qu'**elle comporte un enjoliveur aérodynamique perfectionné conforme à l'une quelconque des revendications précédentes.

10. Véhicule, en particulier véhicule automobile, **caractérisé en ce que** chacune de ses roues est conforme à la revendication 9.

## Patentansprüche

1. Perfektionierte aerodynamische Radkappe für Fahrzeugrad, insbesondere für Kraftfahrzeugrad, wobei das Rad eine zylindrische Felge (11), eine Nabe und eine Struktur vom Typ mit Speichen, die die Nabe mit der Felge (11) verbinden und radiale Aussparungen definieren, aufweist, und wobei die perfektionierte aerodynamische Radkappe einen zentralen Teil (22), einen umfänglichen Rand (21) und eine Radschüssel vom Typ mit radialen Stangen (24), die den zentralen Teil (22) mit dem umfänglichen Rand (21) verbinden und radiale Aussparungen (25) definieren, aufweist, perfektionierte aerodynamische Radkappe **dadurch gekennzeichnet, dass** sie in jeder ihrer radialen Aussparungen (25) zwei aerodynamische Schaufeln (26, 27) umfasst, die sich radial zwischen dem zentralen Teil (22) und dem umfänglichen Rand (21) der Radkappe erstrecken und einen Querschnitt mit "Flugzeugflügelprofil" aufweisen, das heißt eine erste aerodynamische Schaufel (26), die ausgerichtet ist, um die Luft bei der Drehung des Rads in den Uhrzeigersinn anzusaugen, und eine zweite aerodynamische Schaufel (27), die zu der ersten aerodynamischen Schaufel entgegengesetzt ausgerichtet ist, um die Luft bei der Drehung des Rads gegen den Uhrzeigersinn anzusaugen.

2. Perfektionierte aerodynamische Radkappe nach Anspruch 1, **dadurch gekennzeichnet, dass** die Ausrichtung der aerodynamischen Schaufeln (26, 27) einen Winkel ("α") hat, der zwischen 2° und 20° in Bezug auf die Hauptebene ("P") der Radkappe liegt.

3. Perfektionierte aerodynamische Radkappe nach Anspruch 2, **dadurch gekennzeichnet, dass** die Ausrichtung der aerodynamischen Schaufeln (26, 27) einen Winkel ("α") hat, der zwischen 3° und 13° liegt.

4. Perfektionierte aerodynamische Radkappe nach einem der Ansprüche 1 bis 3, **dadurch gekennzeichnet, dass** die Anzahl der radialen Aussparungen (25) fünf beträgt.

5. Perfektionierte aerodynamische Radkappe nach einem der Ansprüche 1 bis 4, **dadurch gekennzeichnet, dass** die radialen Aussparungen (25) Ränder (25A, 25B) aufweisen, die Ablenker bilden, die im Wesentlichen zum Inneren der radialen Aussparungen (25) derart geneigt sind, dass der Luftfluss in den radialen Aussparungen der Struktur des Rads konzentriert wird.

6. Perfektionierte aerodynamische Radkappe nach einem der Ansprüche 1 bis 5, **dadurch gekennzeichnet, dass** das "Flugzeugflügelprofil" des Querschnitts der Radkappen (25) ein Profil ist, das aus den folgenden Profilen vom Typ "Flugzeugflügel", die als solche bekannt sind, ausgewählt ist: Profil vom Typ "CLARK Y", Profil vom Typ "JOUKOWSKI", Profil vom Typ "NACA", symmetrisch oder gekrümmt.

7. Perfektionierte aerodynamische Radkappe nach einem der Ansprüche 1 bis 6, **dadurch gekennzeichnet, dass** sie aus einem Polymermaterial, zum Beispiel vom Typ Polyamid, hergestellt ist.

8. Perfektionierte aerodynamische Radkappe nach Anspruch 7, **dadurch gekennzeichnet, dass** sie durch ein Spritzgussverfahren erhalten wird.

9. Fahrzeugrad, **dadurch gekennzeichnet, dass** es eine perfektionierte aerodynamische Radkappe nach einem der vorhergehenden Ansprüche umfasst.

10. Fahrzeug, insbesondere Kraftfahrzeug, **dadurch gekennzeichnet, dass** jedes seiner Räder Anspruch 9 entspricht.

## Claims

1. An improved aerodynamic cover for a vehicle wheel, in particular for a motor vehicle wheel, said wheel having a cylindrical rim (11), a hub and a structure of the type with spokes, connecting the hub to the rim (11) and defining radial cut-outs, and said improved aerodynamic cover having a central part (22), a peripheral edge (21) and a disc of the type with radial bars (24) connecting the central part (22) to the peripheral edge (21) and defining radial cut-outs (25), said improved aerodynamic cover being **characterized in that** it includes, in each of its radial cut-outs (25), two aerodynamic blades (26, 27), which extend radially between the central part (22) and the peripheral edge (21) of the cover and which have a cross-section with an "aircraft wing" profile, namely a first aerodynamic blade (26) oriented to draw in the air during the rotation of the wheel in a clockwise direction, and a second aerodynamic blade (27) oriented in an opposite manner to said first aerodynamic blade, to drawn in the air during the rotation of the wheel in an anticlockwise direction.

2. The improved aerodynamic cover according to Claim 1, **characterized in that** the orientation of the aerodynamic blades (26, 27) is of an angle ("α") comprised between 2° and 20° with respect to the principal plane ("P") of the cover.

3. The improved aerodynamic cover according to Claim 2, **characterized in that** said orientation of the aerodynamic blades (26, 27) is of an angle ("α") comprised between 3° and 13°.

4. The improved aerodynamic cover according to any one of Claims 1 to 3, **characterized in that** the number of radial cut-outs (25) is equal to five.

5. The improved aerodynamic cover according to any one of Claims 1 to 4, **characterized in that** the radial cut-outs (25) have edges (25A, 25B) forming deflectors, substantially inclined towards the interior of said radial cut-outs (25), so as to concentrate the flow of air in the radial cut-outs of the structure of the wheel.

6. The improved aerodynamic cover according to any one of Claims 1 to 5, **characterized in that** the "aircraft wing" profile of the cross-section of the cover blades (25) is a profile selected from the following "aircraft wing" profile types, known per se: profile of "CLARK Y" type, profile of "JOUKOWSKI" type, profile of "NACA" type, symmetrical or cambered.

7. The improved aerodynamic cover according to any one of Claims 1 to 6, **characterized in that** it is made from a polymer material, of polyamide type for example.

8. The improved aerodynamic cover according to Claim 7, **characterized in that** it is obtained by an injection moulding method.

9. A vehicle wheel, **characterized in that** it comprises an improved aerodynamic cover according to any one of the preceding claims.

10. A vehicle, in particular a motor vehicle, **characterized in that** each of its wheels is according to Claim 9.
